# EUROPÄISCHE PATENTANMELDUNG

(11) **EP 2 156 872 A1**
(43) Veröffentlichungstag der Anmeldung: **24.02.2010**
(21) Anmeldenummer: 09009231.3
(22) Anmeldetag: 15.07.2009
(51) Int. Cl.: B01D 21/02, B01D 21/24, C02F 3/12

(54) **Klärbecken mit Auslasseinrichtung**

(30) Priorität: 22.08.2008 DE 202008011241 U
(71) Anmelder: Baumann, Markus, 32547 Bad Oeynhausen (DE)
(72) Erfinder: Baumann, Markus, 32547 Bad Oeynhausen (DE)
(74) Vertreter: Steinmeister, Helmut

(57) **Zusammenfassung**

Die Erfindung betrifft ein Klärbecken mit Auslaßeinrichtung für Klarwasser, welche Auslaßeinrichtung einen im Klärbecken angeordneten Nachklärbehälter (12) umfaßt, der eine untere Einlaßöffnung (16) aufweist und auf einer Höhe oberhalb der Einlaßöffnung (16) mit einem Ablauf (22) zur seitlichen Abführung von Klarwasser aus dem Nachklärbehälter (12) nach außen versehen ist, **dadurch gekennzeichnet, dass** der Nachklärbehälter (12) an seiner Oberseite im wesentlichen luftdicht abgeschlossen ist.

## Beschreibung

Die vorliegende Erfindung betrifft ein Klärbecken mit einer Auslaßeinrichtung für Klarwasser gemäß dem Oberbegriff des Anspruchs 1.

Klärbecken der vorliegenden Art stellen üblicherweise eine Klärstufe einer Kleinkläranlage dar, nämlich die eigentliche Klärkammer, in der das vorgereinigte Abwasser einer biologischen Reinigung unterzogen wird. Der Inhalt der Klärkammer wird zeitweise belüftet und durchmischt.

Während sich die darin enthaltenen Schlammpartikel vorwiegend auf dem Beckengrund sammeln, gelangt das biologisch gereinigte Wasser in einen Nachklärbehälter, der im oberen Klärbeckenbereich angeordnet sein kann und aus welchem die Klarwasserentnahme stattfindet. Über eine untere Einlaßöffnung strömt das Wasser in den Nachklärbehälter ein und füllt diesen bis zu einer Ablauföffnung, die durch geeignete Maßnahmen gedrosselt sein kann. Der Nachklärbehälter bildet somit ein weitgehend geschlossenes Volumen, das vor Turbulenzen im Klärbecken geschützt ist. In diesem Nachklärvolumen enthaltene Schlammpartikel können bis zur Einlaßöffnung absinken und wieder in das Klärbecken eintreten. Derartige Konstruktionen sind beispielsweise in der europäischen Patentanmeldung 04 000 591 sowie dem deutschen Gebrauchsmuster 20 2008 003 061 der Anmelderin beschrieben. Hier ist der Nachklärbehälter als Steigrohr ausgebildet, in welches ein Rohrstutzen seitlich hineinragt, der mit der Ablauföffnung versehen ist.

Ein Problem stellt jedoch Schwimmschlamm dar, der sich an der Wasseroberfläche sammelt und in die Ablauföffnung eintreten kann oder diese verstopft, so dass der ordnungsgemäße Betrieb der Kleinkläranlage gestört wird. Dieser Schwimmschlamm hat üblicherweise die Form eines mehr oder weniger festen Schaums und entsteht durch Bakterienstämme, an deren Oberfläche Gasblasen anhaften.

Aufgabe der vorliegenden Erfindung ist es daher, den Ablauf des Klärbeckens von Schwimmschlamm freizuhalten und somit zu gewährleisten, dass ausschließlich einwandfreies Klarwasser störungsfrei aus dem Klärbecken abgeführt wird. Insbesondere soll bereits die Entstehung von Schwimmschlamm möglichst effektiv unterbunden werden.

Diese Aufgabe wird erfindungsgemäß durch die Merkmale des Anspruchs 1 erfüllt.

Durch den luftdichten Abschluß wird ein Gasaustausch zwischen dem Raum oberhalb des Klarwasserspiegels innerhalb des Nachklärbehälters und der Umgebungsatmosphäre wirksam verhindert. Findet im Nachklärvolumen noch eine Aktivität von Mikroorganismen statt, so zehren diese allmählich den im Nachklärbehälter noch vorhandenen Luftsauerstoff auf. Es bildet sich somit ein sauerstoffarmes Milieu, das infolge des Luftabschusses auch nicht mehr erneut mit Sauerstoff angereichert werden kann. Den Bakterienstämmen im Klarwasser wird somit die Grundlage für den Stoffwechsel entzogen. Auf diese Weise wird die Bildung von Schwimmschlamm wirkungsvoll verhindert.

In einer bevorzugten Ausführungsform ist die Oberseite des Nachklärbehälters durch einen abnehmbaren Deckel verschlossen.

Vorzugsweise ist der Nachklärbehälter als Steigrohr ausgebildet.

Im folgenden wird ein bevorzugtes Ausführungsbeispiel der Erfindung anhand der Zeichnung näher erläutert.

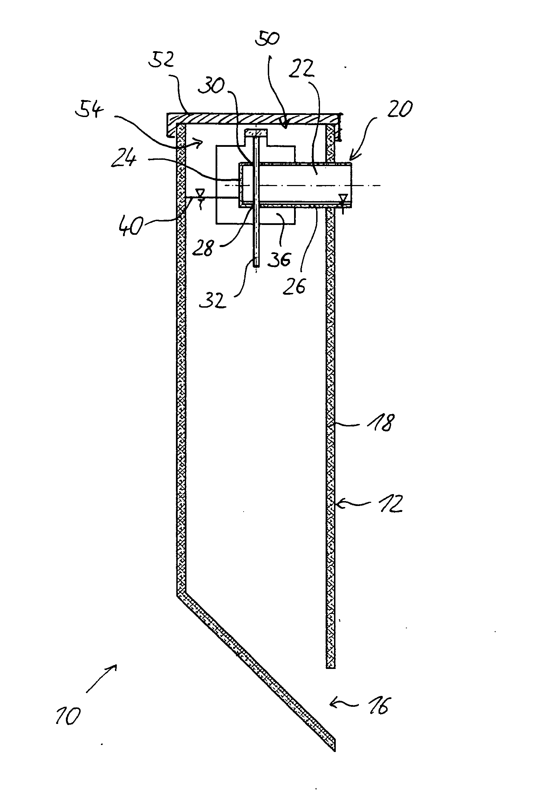

- Fig. 1: zeigt einen vertikalen Längsschnitt durch die Auslaßeinrichtung eines erfindungsgemäßen Klärbeckens.

Die in der Figur dargestellte Auslaßeinrichtung ist zur Anbringung im oberen Bereich eines hier nicht näher dargestellten Klärbeckens einer Kleinkläranlage vorgesehen. In dieser findet eine biologische Abwasserklärung statt, nachdem das Abwasser zuvor von Grobstoffen gereinigt worden ist. Für die biologische Klärung befindet sich Belebschlamm im Klärbecken.

Die Auslaßeinrichtung umfaßt einen Nachklärbehälter in Form eines vertikalen Steigrohrs 12, in welchem eine Abtrennung des Schlamms vom gereinigten Wasser stattfindet und in dessen oberem Bereich ein Ablauf 22 angeordnet ist. Der Ablauf 22 wird gebildet durch einen horizontalen Rohrstutzen 20, der durch die zylindrische Seitenwand 18 des Steigrohrs 12 geführt ist. Während die Stirnseite 24 des Rohrstutzens 20 verschlossen ist, ist an der Unterseite des Rohrstutzens 20 eine Ablauföffnung 28 angeordnet, durch welche Klarwasser, das im Steigrohr 12 aufgestiegen ist, in den Rohrstutzen 20 eindringen und seitlich zum Außenbereich abfließen kann. Ferner ist auf der Oberseite des Rohrstutzens 20 eine Überlauföffnung 30 angeordnet. Ein senkrechter Stab 32 durchquert sowohl die Überlauföffnung 30 als auch die Ablauföffnung 28. Der Stab 32 ist derart mit einem Schwimmkörper 36 verbunden, dass eine den Klarwasserspiegel im Steigrohr 12 folgende Auf- und Abbewegung des Schwimmkörpers 36 zu einer vertikalen Bewegung des Stabs 32 entlang seiner Stabachse führt. So wird gewährleistet, dass die Ablauföffnung 28 nicht verstopft wird. An seinem unteren Ende ist eine Einlaßöffnung 16 am Steigrohr 12 angeordnet, durch die das Klarwasser aus dem Klärbecken in das Steigrohr 12 eindringen und in diesem aufsteigen kann.

Im Hinblick auf die vorstehend beschriebenen Einzelheiten entspricht diese Auslaßeinrichtung derjenigen, die im deutschen Gebrauchsmuster 20 2008 003 061 beschrieben ist.

Erfindungsgemäß ist das Steigrohr 12 jedoch nicht an seinem oberen Ende offen, sondern seine obere Öffnung 50 ist durch einen abnehmbaren Deckel 52 verschlossen. Der Deckel 52 sorgt für einen im wesentlichen luftdichten Abschluß, so dass kein Gasaustausch zwischen der Umgebungsatmosphäre und dem Gasvolumen 54 im Steigrohr 12 oberhalb des Klarwasserspiegels 40 stattfinden kann. Findet im Klarwasser-Oberflächenbereich eine Aktivität von Mikroorganismen unter Verbrauch von Sauerstoff statt, so wird dieser dem Gasvolumen 54 unterhalb des Deckels 52 entzogen. Damit wird den Bakterienstämmen die Grundlage für eine weitere Stoffwechselaktivität entzogen. Ein luftdichter Abschluß durch den Deckel 52 sorgt somit dafür, dass solche Bakterienstämme sich im Oberflächenbereich des Klarwassers und damit in der Nähe des Ablaufs nicht mehr manifestieren können. Damit tritt auch kein Schwimmschlamm im Oberflächenbereich mehr auf.

Der Deckel 52 kann auf beliebige Weise auf dem Steigrohr 12 angebracht sein, etwa mit Hilfe eines Scharniers und einer entsprechenden Verriegelung, jedoch so, dass er zu Wartungsarbeiten leicht geöffnet werden kann. Ferner kann zum luftdichten Abschluß zwischen Deckel 52 und der oberen Öffnung 50 des Steigrohrs 12 an der Oberkante der äußeren Wand 18 des Steigrohrs 12 eine Dichtung angebracht sein. Unter Umständen kann es sich auch als praktikabel erweisen, auf eine Dichtung zu verzichten, so dass noch ein Druckausgleich zwischen dem Gasvolumen 54 unterhalb des Deckels 52 und der Umgebungsatmosphäre stattfinden kann und bei ansteigendem oder absinkenden Wasserspiegel 40 im Steigrohr 12 kein Unterdruck oder Überdruck im Gasvolumen 54 aufgebaut wird. Hierbei wird in Kauf genommen, dass gegebenenfalls ein gewisses Luftvolumen in das Steigrohr 12 eingesaugt wird. Die hiermit einhergehende Sauerstoffzufuhr ist jedoch so gering, dass der erfindungsgemäße Effekt eines weitgehenden Luftanschlusses hierdurch kaum beeinträchtigt wird.

## Patentansprüche

1. Klärbecken mit Auslaßeinrichtung für Klarwasser, welche Auslaßeinrichtung einen im Klärbecken angeordneten Nachklärbehälter (12) umfaßt, der eine untere Einlaßöffnung (16) aufweist und auf einer Höhe oberhalb der Einlaßöffnung (16) mit einem Ablauf (22) zur seitlichen Abführung von Klarwasser aus dem Nachklärbehälter (12) nach außen versehen ist, **dadurch gekennzeichnet, dass** der Nachklärbehälter (12) an seiner Oberseite im wesentlichen luftdicht abgeschlossen ist.

2. Klärbecken gemäß Anspruch 1, **dadurch gekennzeichnet, dass** der Nachklärbehälter (12) an seiner Oberseite durch einen abnehmbaren Deckel (52) verschlossen ist.

3. Klärbecken gemäß Anspruch 1 oder 2, **dadurch gekennzeichnet, dass** der Nachklärbehälter als Steigrohr (12) ausgebildet ist.

## Geänderte Patentansprüche

### Geänderte Patentansprüche gemäss Regel 137(2) EPÜ.

1. Klärbecken mit Auslaßeinrichtung für Klarwasser, welche Auslaßeinrichtung einen im Klärbecken angeordneten Nachklärbehälter (12) umfaßt, der als Steigrohr (12) ausgebildet ist und eine untere Einlaßöffnung (16) aufweist und auf einer Höhe oberhalb der Einlaßöffnung (16) mit einem Ablauf (22) zur seitlichen Abführung von Klarwasser aus dem Nachklärbehälter (12) nach aussen versehen ist, **dadurch gekennzeichnet, dass** der Nachklärbehälter (12) an seiner Oberseite zur Verhinderung eines Gasaustausches zwischen dem Raum oberhalb des Klarwasserspiegels innerhalb des Nachklärbehälters (12) und der Umgebungsatmosphäre im wesentlichen luftdicht abgeschlossen ist, derart, dass die Bildung von Schwimmschlamm verhindert wird.

2. Klärbecken gemäß Anspruch 1, **dadurch gekennzeichnet, dass** der Nachklärbehälter (12) an seiner Oberseite durch einen abnehmbaren Deckel (52) verschlossen ist.
